Europäisches Patentamt

European Patent Office

Office européen des brevets

(19)

(11) Publication number: **0 071 461**
**A1**

(12) **EUROPEAN PATENT APPLICATION**

(21) Application number: **82303967.2**

(22) Date of filing: **27.07.82**

(51) Int. Cl.³: **A 01 M 31/06**

(30) Priority: **28.07.81 GB 8123273**

(43) Date of publication of application:
**09.02.83 Bulletin 83/6**

(84) Designated Contracting States:
**AT BE CH DE FR GB IT LI LU NL SE**

(71) Applicant: **Storry, John Frederic**
**East Anglian Shooting Products London Road**
**Attleborough Norwich Norfolk(GB)**

(72) Inventor: **Storry, John Frederic**
**London Road**
**Attleborough Norwich Norfolk(GB)**

(72) Inventor: **Barnes, Roger John**
**Bingles Turn**
**Hevingham Norwich Norfolk(GB)**

(74) Representative: **Jones, William**
**Old Bank of England Court Queen Street**
**Norwich NR2 4SX(GB)**

(54) **Bird decoy.**

(57) A bird decoy has an elongate chassis (11) with a spike (15) on which the body of a dead bird can be impaled. Side members (12) hold the dead body in position laterally. Arms (16, 17) mounted pivotally in the nose (27) of the chassis carry "crocodile" clips (18, 19) at their respective ends and are spring-loaded back towards the chassis. In use, the clips (18, 19) grip the wing tips of the dead bird; the arms (16, 17) are actuated by pulling one end of a line (not illustrated) the other end of which is attached via a linking cord (22) to each arm; and the resultant pivotal movement of the arms, and wings, away from and back towards the chassis simulates the wing-flapping movements of a live bird.

Figure 1

EP 0 071 461 A1

Croydon Printing Company Ltd.

- 1 -

BIRD DECOY

## Field of the Invention

The invention relates to bird decoys. It is particularly concerned with bird decoys in which a flapping-wing movement can be given to the decoy by its user. Such decoys will be referred to as decoys "of the kind in question".

## Review of the Prior Art

The applicant has had an extensive search made amongst previously published UK patent specifications. The object of this search was to survey the art in relation to decoys and in particular to decoys of the kind in question. The search was carried out in Division A1 (Animal Husbandry) Heading M24 (bird and other decoys) of the UK Patent Office classification system. It covered the period 1st January 1911 to 16th December 1981.

The following UK patents found in this search disclose bird decoys comprising artificial birds having little or no movement:

1 454 523          Graham A
1 385 023          Rayner M A et al
500 732          Caseley W

| 492 511 | Burke R St.G et al |
|---------|---------------------|
| 449 712 | Burke R St.G |
| 431 190 | Boddy H E |
| 389 522 | Baker M & ICI Limited |
| 341 236 | Bower H M C et al |
| 966 386 | Durrows W H et al |
| 1 178 205 | Stephens R A |
| 327 063 | Scott R L |
| 920 340 | Home-Gall D B |
| 934 648 | Whitehead C K |
| 621 277 | Aveline R P.C |
| 625 497 | Feusner J L |
| 611 844 | Peskett J E |
| 587 067 | Smith J |

The following UK patents disclose decoys which do incorporate movement and which constitute decoys of the kind in question:

| 536 474 | Stops N |
|---------|---------|
| 406 386 | Penn A H |
| 383 031 | Mieville M F |
| 1 308 253 | Gregory P G |
| 193 738 | Turvey H W |
| 2 067 064 A | Grace T H |

Amongst the prior art listed above, 2 067 064 A (Grace) discloses a decoy consisting essentially of a chassis on which the body of a dead bird can be impaled and having arms which pull the dead bird's wings in a flapping movement. However, there is no simple provision for locating the dead body sideways of the chassis; there appears to be no really positive means of securing the bird's wing-tips to the flap-arms; and, worst of all, the arms are spring-loaded into a normally open position so that the user must keep constant tension on his pull-line to keep the bird's wings shut.

The wings will, of course, normally need to be kept shut, and only occasionally flapped open and shut again, and so this spring-loaded-open arrangement is a major drawback of the Grace decoy which seriously hampers the user in his other movements.

The present invention seeks to provide a bird decoy which, like the Grace decoy, gives a wing-flapping movement but which is without the drawbacks just outlined.

## Summary of the Invention

According to the broadest aspect of the invention, a bird decoy consists essentially of an elongate chassis which is adapted to be impaled, in use, in the ground or onto the end of a post projecting from the ground; two arms projecting one from each opposite side of the chassis and carrying at their respective projecting ends a clip which, in use, holds an adjacent wing of the dead bird against the arm; and a linkage, connecting the two arms, which in use can be actuated remotely by pulling one end of a line the other end of which is attached to the linkage; the linkage being so constructed that when the line is pulled to actuate the linkage the clips, and with them the wings, move in unison away from the dead bird's body; and when the line, and linkage, are subsequently released, the clips and the wings move automatically back towards the body.

Such an apparatus, carrying the body of a dead bird, and with the linkage operated intermittently by a user hidden from view, forms an effective decoy attracting pigeons and other birds to be trapped or shot.

Preferably the arms are spring-loaded, either directly or via the linkage, back towards the chassis (and hence, in use, towards the body of the dead bird). This is better than relying entirely on the inherent resilience of the wing muscles which, naturally, decreases as the dead body stiffens. Preferably also the clips are of the kind which grip the adjacent wing positively to hold the wing fast to the arm. As the dead bird stiffens, clips of this kind may become essential for the wing-flapping movement to be effective. They may for example be spring-loaded clips of the kind popularly referred to as "crocodile" clips. It is, however, within the scope of the invention for the clips to allow the wing to slide through them whilst nevertheless constraining it to move with the arm away from and back towards the body of the dead bird.

The chassis may carry a spike, on which the body of the dead bird can be impaled, and may also have side members to hold the body in place on the chassis when so impaled. The spike provides a positive location of the body longitudinally on the chassis, and the side members locate the body crosswise of the chassis, without the need for straps or clips which by comparison are troublesome to operate and which would also detract from the realism of the decoy.

The movement of the arms away from and back towards the chassis may be a pivotal movement. This can readily be arranged without the need for complicated articulated or sliding linkages. Alternatively or additionally the arms may slide relative to the chassis. The arms may for example telescope to give the required movement, and enable the decoy to accommodate a wide range of wing-spans.

A decoy embodying the invention may be supplied with a post, one end of which can be impaled into the ground so as to project therefrom whilst the other end fits and carries the chassis. Alternatively or additionally the said one end of the post may fit and be supported by a peg which can itself be impaled into the ground before receiving the post. In the latter arrangement, the peg can positively be rammed down into the ground by the user's foot, and the post fitted into it, and there is then minimal risk of the post working its way out of the ground if the peg has first been fully driven home.

The chassis, or the post, may carry or define a ring through which the line attached to the linkage passes on its way from the linkage to the user.

Where the arms are pivotally mounted on the chassis, one respective half of each of the necessary pivot bearings may be formed in one of two portions of the chassis, each of which portion fits onto the other to complete the pivot bearings when the chassis is first being assembled. This enables the pivoting arms themselves to be accurately prefabricated, on special jigs if necessary, rather than having to be inserted as straight arms into an already-complete pivot bearing and then bent to shape in the bearing with consequent risk of damage to the bearing as well as inaccurate fabrication of the arms.

One bird decoy embodying the invention is shown, by way of example only, in the accompanying drawings. It will now be described with reference to those drawings.

Brief Description of the Drawings

Figure 1 shows the chassis and associated parts viewed in perspective from above;

Figure 2 shows the same parts viewed in perspective from below;

Figure 3. again in perspective, shows details of the assembly of part of the chassis;

Figures 4A, 4B and 4C show details of the post and peg which complete the assembly; and

Figure 5 shows a modified version of the chassis.

Description of the Preferred Embodiments

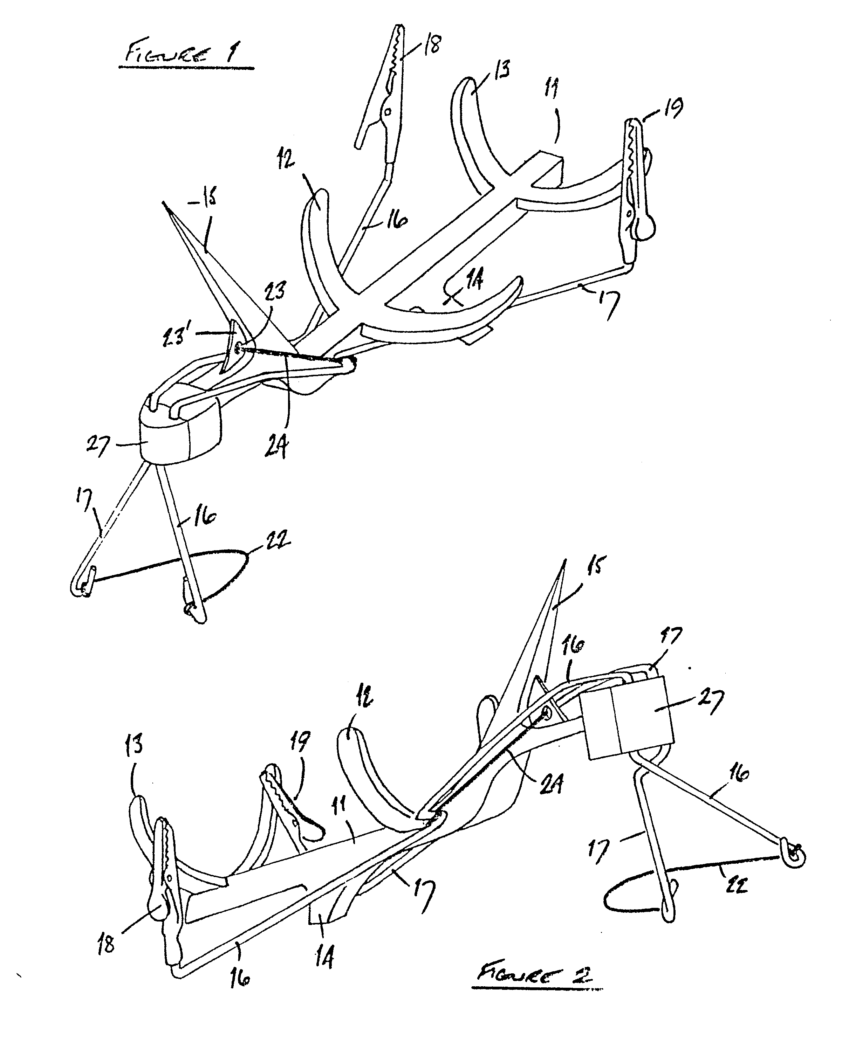

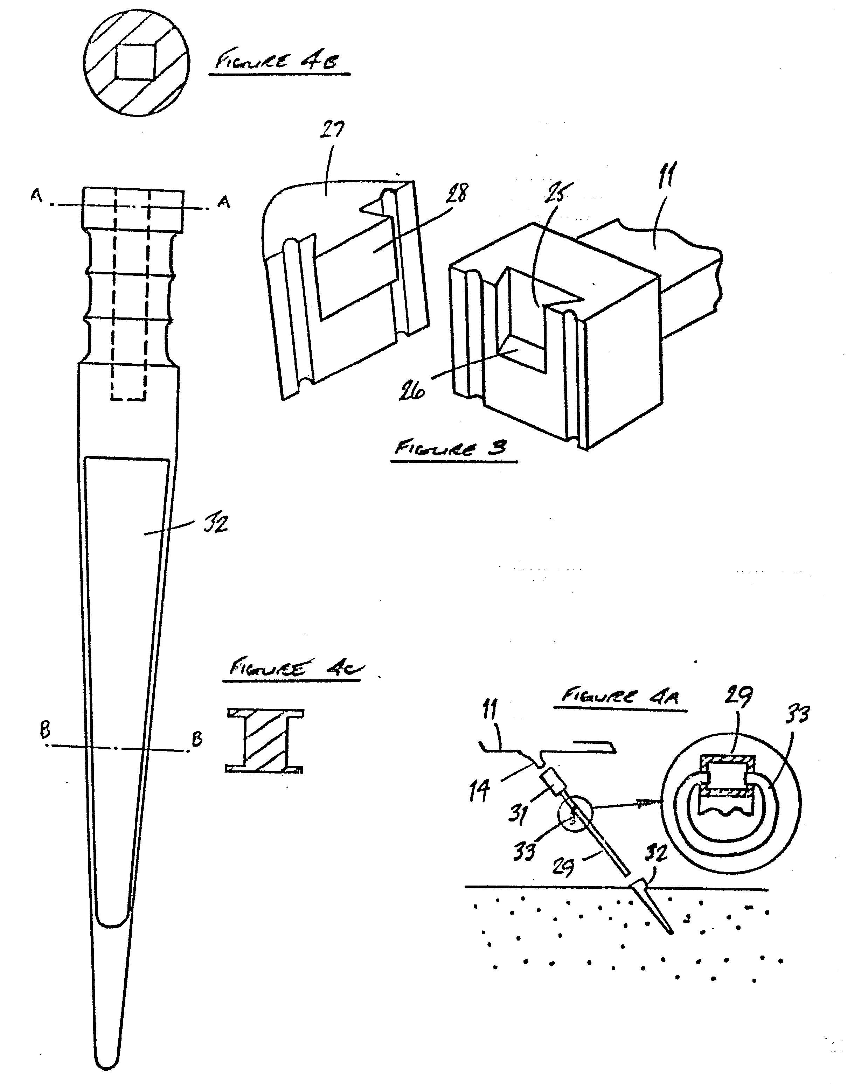

Referring initially to Figures 1 and 2, an elongate chassis referenced 11 has two semi-circular hoops 12, 13 spaced along its length and also has a square-section projection 14 extending a short way from the chassis. The two hoops 12, 13 both project from the top side of the chassis, whilst the projection 14 extends from the underside of the chassis.

An elongate spike 15 also projects from the top side of the chassis. The spike 15, the projection 14, and the hoops 12, 13 are all cast integrally with the chassis which may be of metal or synthetic plastics construction. The spike and hoops are so positioned, relative to one another, that if the body of a dead pigeon is impaled on the spike then the hoops 12, 13 support the body crosswise of the chassis 11. The hoops thus constitute side members of the chassis 11.

Two elongate arms respectively 16, 17 project each from a respective opposite side of the chassis 11. Each arm carries at its projecting end a respective clip referenced, respectively, 18, 19. Each clip is a spring-loaded clip of the kind known popularly as a "crocodile" clip, i.e. the clip has elongate serrated jaws as illustrated and the serrations mate with one another when the jaws come together to give a positive grip, under very strong torsion-spring loading halfway along the wing leading edge.

The inner end of each arm 16, 17 is pivotally attached to the nose 21 of the chassis 11 in front of the spike 15. The formation of the pivot bearings will be described in detail later, but it will be seen from Figures 1 and 2 that the inner ends of the arms 16,17 emerging from the bearings in the nose 21 of the chassis are joined by a relatively short length of cord 22. The cord 22 constitutes a linkage between the arms 16, 17.

A web of material 23', cast integrally with the spike 15 and the adjacent nose portion of the chassis 11, has a hole 23 formed in it. A length of elastic cord 24 passes through the hole 23 as it joins one arm 16 to the other arm 17. If the linkage cord 22 is pulled, the arms 16, 17 will pivot away from one another (and hence away from the chassis 11) against the spring action of the elastic cord 24. When the linkage cord 22 is subsequently released, the spring action of the elastic cord 24 will automatically pull the arms 16, 17 back towards one another (and hence back into the chassis sides).

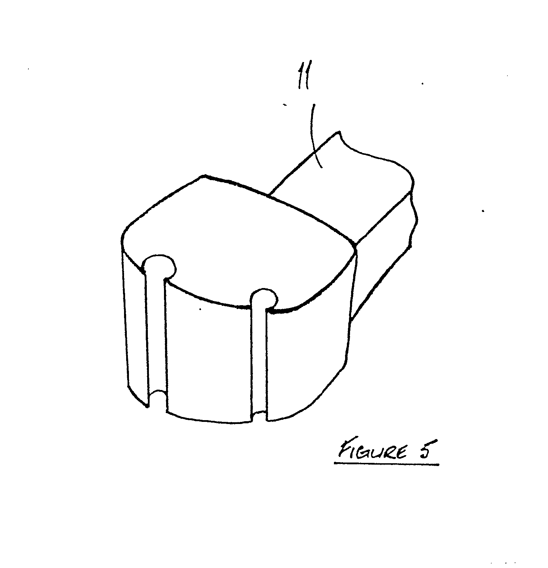

Referring now to Figure 3, it will be seen that the nose region of chassis 11 is initially in two parts. That part which is cast, moulded or machined integrally with the rest of the chassis 11 has a dovetailed recess 25 formed in it. The recess 25 opens onto the top surface of the chassis, in front of the spike 15, but it does not open onto the bottom surface of the chassis: As Figure 3 shows, the base 26 of the recess 25 occurs approximately halfway down the distance between the top and bottom chassis surfaces.

An initially separately formed nose portion 27 has a dovetail 28 extending from it. The dovetail 28, again, does not extend the full depth of the portion 27, but stops approximately halfway down it. The dovetail 28 is so sized as to fit tightly into the dovetailed recess 25, and the nose portion 27 can thus be fitted onto the front of the chassis 11 by, for example, dropping a spot of adhesive into the recess 25 and then pushing the dovetailed nose portion 27 home.

As Figure 3 also shows, respective halves of each of the pivot bearings for the arms 16, 17 are formed in the portion 27 and the dovetail-recessed front portion of the chassis 11. When the portion 27 is pushed home, the pivot bearing halves align with one another. This construction makes it possible for the arms 16, 17 which are formed with elongate resilient metal wire, to be bent to shape on a separate jig rather than having to be first passed as straight wires through non-split bores in a fully-integrally-nosed chassis and then bent to shape once they are in the chassis. The geometry of the arms 16, 17 is extremely important if the arm linkage is to work properly in pivoting the arms away from and back towards the chassis. The construction illustrated in Figure 3 is therefore a major innovation.

A square-section aluminium post 29 ends in an enlarged head 31 which is also of square-section and is hollow. The projection 14 fits into the head 31. The end of the post 29 remote from the head 31 also fits into a square-section bore in the top of a peg 32. Figure 4A shows the post and peg, and the way they fit into the projection 14; whilst Figure 4B shows successive sections A-A and B-B through the peg body.

In use, and with the body of a dead pigeon carried by the chassis as outlined previously, the projection 14 is fitted into the head 31. The peg 32 is impaled into the ground, driven home for example by foot pressure, and the end of the post 29 remote from the head 31 is fitted into it. The chassis, with the bird, is thus supported some way above the ground. A length of line (not shown) is fastened to the midpoint of the linkage cord 22 and is led through a "D" ring 33 pivotally carried by the post 29. Having passed through this ring, the cord is led away to the user who conceals himself from view.

By intermittently pulling and releasing the cord, the user operates the linkage cord 22 and flaps the wings of the dead pigeon. The ring 33 enables the user to position himself at any point around the decoy and a pull on the line will have the same result irrespective of such positioning. For example, the user could even position himself in front of the decoy (i.e. facing, although of course some considerable distance from, the nose of the chassis) and the cord-pull would still work.

In Figure 5, the chassis nose does not have a separate front portion dovetailed into it as previously described and illustrated. Instead, the bores which constitute the pivot bearings are open along the front of the nose. The open channels in each bore occupy considerably less than a semi-circle of the bore section, and the chassis nose is made of a resilient plastics material. These two features enable the arms 16, 17 to be "snap"-fitted into the bores.

As with the previous construction, the arms 16, 17 can be accurately fabricated to shape on separate jigs before being snapped into the bores in Figure 5.

In another modification, not illustrated, the previously-described dovetail nose fitment is used but the dovetail tapers towards its base. The main chassis recess which accepts the dovetail is similarly and co-operatingly tapered, and in that case there is then no need for a positive base to the dovetail or to the recess. The nose will automatically fit fully home when the taper prevents it from being pushed any farther downwards into its accommodating recess.

CLAIMS

1.  A bird decoy comprising an elongate chassis which is adapted to carry the body of a dead bird and is also adapted to be impaled, in use, in the ground or onto the end of a post projecting from the ground; two arms projecting one from each opposite end of the chassis and carrying at their respective projecting ends a clip which, in use, holds an adjacent wing of the dead bird against the arm: and a linkage, connecting the two arms, which in use can be actuated remotely by pulling one end of a line the other end of which is attached to the linkage; <u>characterised in that</u> the linkage (16, 17, 22) moves the arms (16, 17) in unison away from the dead bird's body when the pull-line is actuated; <u>in that</u> the arms (16, 17) move automatically back towards the bird's body when the pull-line is released or remains unactuated; <u>and in that</u> the clips (18, 19) hold the bird's wings positively adjacent the respective arms (16, 17) as the arms move away from and back towards the chassis (11).

2.  A decoy according to Claim 1 and <u>characterised in that</u> the arms (16, 17) are spring-loaded, either directly or via indirect means (24), back towards the chassis (11) and hence, in use, towards the body of the dead bird.

3.  A decoy according to Claim 1 or Claim 2 and <u>characterised in that</u> the clips (18, 19) are of the kind which grip the adjacent wing in a positive non-sliding grip to hold the wing fast to the arm (16,17).

4.  A decoy according to Claim 3 and <u>characterised in that</u> the clips (18, 19) are spring-loaded clips of the kind known as "crocodile" clips.

**0071461**

5. A decoy according to any one of the preceding Claims and characterised in that the body of the dead bird is retained in position on the chassis by the combination of a spike (15), on which the body is impaled, and hoop-like side members (12, 13).

6. A decoy according to any one of the preceding Claims and characterised in that the chassis (11) fits and is carried by a post (29, 31) one end of which can be impaled into the ground so as to project therefrom whilst the other end (31) carries the chassis (11).

7. A decoy according to Claim 6 and characterised in that the said one end of the post (29), as well as or instead of being impaled into the ground, fits and is supported by a peg (32) which can itself be impaled into the ground to receive the post (29).

8. A decoy in accordance with any of the preceding Claims and characterised in that the chassis (11) or, as appropriate, the post (29) carries or defines a ring (33) through which the pull-line attached, in use, to the linkage (22) passes on its way from the linkage to the user.

9. A decoy in accordance with any of the preceding Claims and in which the arms are pivotally mounted on the chassis and characterised in that one respective half of each of the necessary pivot bearings is formed in one of two portions of the chassis (11) and in that one (27) of said portions is formed separately from the rest of the chassis and fits onto the other portion via an interlock (25, 26, 28) to complete the pivot bearings when the decoy is being assembled.

10. A decoy in accordance with any of Claims 1 to 8 and in which the arms are pivotally mounted on the chassis and characterised in that the pivot bearings exhibit open channels into which the arms (16, 17) are snap-fitted when assembling the decoy

FIGURE 1

FIGURE 2

FIGURE 4B

A········A

FIGURE 3

27

28

25

11

26

32

FIGURE 4C

B········B

FIGURE 4A

11

14

31

33

29

32

29

33

11

FIGURE 5

European Patent Office

EUROPEAN SEARCH REPORT

**0071461**
Application number

EP 82 30 3967

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| D,Y | GB-A-2 067 064 (T.H. GRACE)<br><br>* Whole document * | 1-3,5,6 | A 01 M 31/06 |
| Y | US-A-3 537 205 (A.J. ROBERT)<br><br>* Column 2, line 45 - column 3, line 31; figures 1-4 * | 1,2,6,7 | |
| D,A | GB-A-1 308 253 (P.G. GREGORY) | | |
| A | FR-A-1 361 893 (L.M.J. GOSRE) | | |
| A | FR-A-1 371 064 (J. LATRILLE) | | TECHNICAL FIELDS SEARCHED (Int. Cl. ³) |
| A | US-A-4 128 959 (M. SNOW) | | A 01 M |

- - - - -

The present search report has been drawn up for all claims

| Place of search | Date of completion of the search | Examiner |
|---|---|---|
| THE HAGUE | 26-10-1982 | NEHRDICH H.J |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03 82